# EUROPÄISCHE PATENTSCHRIFT

(11) **EP 2 427 359 B1**
(45) Veröffentlichungstag und Bekanntmachung des Hinweises auf die Patenterteilung: **29.04.2015**
(21) Anmeldenummer: 10718494.7
(22) Anmeldetag: 03.05.2010
(51) Int. Cl.: B62D 3/12

(54) **ZAHNSTANGENLENKUNG**
RACK-AND-PINION STEERING
DIRECTION À CRÉMAILLÈRE

(30) Priorität: 04.05.2009 DE 102009019890
(43) Veröffentlichungstag der Anmeldung: 14.03.2012
(73) Patentinhaber: TRW Automotive GmbH, 73553 Alfdorf (DE)
(72) Erfinder: SCHAUMANN, Lothar, 40885 Ratingen (DE)
(74) Vertreter: Prinz & Partner mbB
(86) Internationale Anmeldenummer: PCT/EP2010/002687
(87) Internationale Veröffentlichungsnummer: WO 2010/127816

(56) Entgegenhaltungen:
- EP-A1- 1 777 138
- WO-A1-03/029067
- WO-A1-2005/028284
- JP-A- 11 078 914
- JP-A- 2004 232 714
- JP-U- H0 669 061
- US-A- 4 218 933
- US-A1- 2006 131 828

## Beschreibung

Die Erfindung betrifft eine Zahnstangenlenkung gemäß dem Oberbegriff der Patentansprüche 1 oder 2.

Eine Zahnstangenlenkung ist beispielsweise aus der WO 03/029067 A1 bekannt. Die Endanschlag-Dämpfungsbaugruppe weist dabei zwei zur Bildung von Flanschen abgewinkelte Buchsen und ein elastisch nachgiebiges Material auf, wobei die ineinandergesteckten Buchsen und ihre Flansche eine annähernd hohlzylindrische Kammer bilden, welche das elastisch nachgiebige Material vollständig umschließt. Während die eine Buchse fest in einem Gehäuse installiert ist, kann die andere bezüglich einer Zahnstangenachse axial bewegt werden, wodurch das elastisch nachgiebige Material im Bereich eines Endanschlags komprimiert und der Endanschlag gedämpft erfolgt. In einer Ausführungsvariante der Lenkung kann die fest im Gehäuse installierte Buchse auch einstückig in das Gehäuse integriert sein.

Bei der Endanschlagdämpfung von Zahnstangenlenkungen ist es prinzipiell wünschenswert, dass die Dämpfungsbaugruppe möglichst einfach aufgebaut ist und sich bei geringem Bauraumbedarf mit minimalem Aufwand montieren lässt. Darüber hinaus ist es besonders wichtig, dass die Dämpfungsbaugruppe mit dem elastischen Kompressionskörper eine geeignete Dämpfungs- oder Federkennlinie aufweist.

Bei der WO 03/029067 A1 hat die Endanschlag-Dämpfungsbaugruppe eine sehr steile Kennlinie. Der Endanschlag ist dadurch recht hart, was zu einer hohen Bauteilbeanspruchung führt und über die lange Nutzungsdauer auch Schäden an der Zahnstangenlenkung verursachen kann.

Demgegenüber ist aus der EP 1 777 138 A1 eine Endanschlag-Dämpfungsbaugruppe für eine Zahnstangenlenkung bekannt, bei der elastische Kompressionskörper in Reihe geschaltet sind. Aus dieser Reihenschaltung und den nahezu unbegrenzten Verformungsmöglichkeiten der Kompressionskörper ergibt sich eine sehr flache Kennlinie, das heißt, ein recht weicher Endanschlag. Entsprechend bedarf es eines großen Verformungsweges, um eine ausreichende Gegenkraft zum Abbremsen der Zahnstange bereitzustellen. Die Dämpfungsbaugruppe nimmt demzufolge einen unerwünscht großen Bauraum ein und verursacht aufgrund der Reihenschaltung der Kompressionskörper mit dazwischenliegendem Stabilisierungselement auch einen beachtlichen Fertigungsaufwand.

Die JP 11-78914 A und die WO 2005/028284 A1 zeigen jeweils eine Zahnstangenlenkung, die alle Merkmale im Oberbegriff des Anspruchs 1 aufweist.

In der US 4,218,933 ist ferner eine Zahnstangenlenkung gemäß dem Oberbegriff des Anspruchs 2 beschrieben, wobei in dieser Druckschrift ein separater Feder-Clip vorhanden ist, der eine zur Führung der verschieblichen Zahnstange vorgesehene Führungsbuchse axial im Zahnstangengehäuse fixiert.

Aus der JP 06-69061 U ist eine Zahnstangenlenkung bekannt, die eine Dämpfungsbaugruppe aufweist, die zwei Ringe und einen dazwischenliegenden Kompressionskörper umfasst. Die Bewegung der Zahnstange wird über die Scherung des Kompressionskörpers gedämpft.

Aufgabe der Erfindung ist die Schaffung einer Zahnstangenlenkung mit einer Endanschlag-Dämpfungsbaugruppe, welche einfach aufgebaut und mit geringem Aufwand montierbar ist sowie darüber hinaus gute Einstellmöglichkeiten für eine gewünschte Dämpfungs- oder Federkennlinie bietet.

Diese Aufgabe wird gelöst durch eine Zahnstangenlenkung mit den Merkmalen des Anspruchs 1. Im Vergleich zu einem vollstandig in der Endanschlag-Dämpfungsbaugruppe eingekapselten Kompressionskörper ergeben sich hieraus freiere Verformungsmöglichkeiten für den Kompressionskörper. Beispielsweise lässt sich ein Verformungsraum für den Kompressionskörper mit geringem Aufwand durch eine Variation der axialen Länge des Führungsfortsatzes einstellen. Der Kompressionskörper weist einen Feder-/Dämpfungsabschnitt auf, welcher zwischen zwei Anlageflächen angeordnet ist, die einerseits dem Zahnstangengehäuse und andererseits der Zahnstange zugeordnet sind und sich axial relativ zueinander bewegen. Der Feder-/Dämpfungsabschnitt des Kompressionskörpers hat eine axiale Länge, die im Gegensatz zur WO 03/029067 größer als diejenige des Führungsfortsatzes ist. Der Feder-/Dämpfungsabschnitt des Kompressionskörpers befindet sich im nicht belasteten Zustand, wenn die Zahnstange keine äußere Kraft auf den Feder-/ Dämpfungsabschnitt ausübt. Ein Einbau des Kompressionskörpers unter Vorspannung kann dennoch vorhanden sein.

Die vorgenannte Aufgabe wird auch gelöst durch eine Zahnstangenlenkung mit einer Zahnstange, die eine Längsachse aufweist, einem Zahnstangengehäuse, in dem die Zahnstange zwischen zwei Endanschlägen axial verschieblich aufgenommen ist, einer Endanschlag-Dämpfungsbaugruppe, die wenigstens einen Anschlagring und wenigstens einen elastischen Kompressionskörper umfasst, und einer Führungsbuchse, die zur Führung der verschieblichen Zahnstange dient und in einer Ausnehmung des Zahnstangengehäuses angeordnet ist. Der Anschlagring fixiert die Führungsbuchse axial im Zahnstangengehäuse. Eine solche Führungsbuchse zur Führung der verschieblichen Zahnstange muss insbesondere auf der Beifahrerseite von Fahrzeugen mit Zahnstangenlenkung vorgesehen werden. Gemäß der Erfindung wird nun ein Anschlagring der Endanschlag-Dämpfungsbaugruppe genutzt, um die Führungsbuchse axial im Zahnstangengehäuse zu fixieren. Genau genommen ist die Führungsbuchse im Rahmen üblicher Toleranzen im Zahnstangengehäuse fixiert, weil aufgrund von Herstellungstoleranzen eine minimale Relativbewegung nicht ganz ausgeschlossen werden kann. Dies wird jedoch im Folgenden vernachlässigt. Der Anschlagring ist axial versetzt zur Führungsbuchse angeordnet und bildet einen Anschlag für die Führungsbuchse Vorzugsweise fixiert der Anschlagring nach seiner Montage die Führungsbuchse in axialer Richtung und liegt dauerhaft an ihr an. Die zusätzliche Funktion der Endanschlag-Dämpfungsbaugruppe als Befestigungsmittel für die Führungsbuchse vereinfacht die Konstruktion des Zahnstangengehäuses, da auf gesonderte Vorkehrungen zur Befestigung der Führungsbuchse verzichtet werden kann. Darüber hinaus ergibt sich eine besonders unkomplizierte Montage der Führungsbuchse und der Endanschlag-Dämpfungsbaugruppe.

Die Endanschlag-Dämpfungsbaugruppe ist vorzugsweise am Zahnstangengehäuse befestigt.

In einer bevorzugten Ausführungsform ist die Endanschlag-Dämpfungsbaugruppe in einer Gehäuseöffnung aufgenommen und sitzt mit einer Presspassung im Zahnstangengehäuse. Die Montage der Endanschlag-Dämpfungsbaugruppe und gegebenenfalls die Fixierung der Führungsbuchse sind in diesem Fall mit äußerst geringem Aufwand möglich.

Der Kompressionskörper, vorzugsweise sein Dämpfungsabschnitt, kann ein Ring mit einem im Wesentlichen trapezförmigen Ringquerschnitt sein. Durch die Ringform lässt sich in Umfangsrichtung eine gleichmäßige Flächenpressung erzielen, und durch den trapezförmigen Querschnitt lässt sich besonders vorteilhaft eine progressive Federkennlinie einstellen.

Der Kompressionskörper ist vorzugsweise aus einem Elastomermaterial gefertigt.

In einer Ausführungsform ist der Anschlagring mittels einer Formschlussverbindung am elastischen Kompressionskörper befestigt, wobei die Formschlussverbindung vorzugsweise als Rast- oder Schnappverbindung realisiert ist. Dadurch lassen sich die Einzelteile der Endanschlag-Dämpfungsbaugruppe sozusagen mit einem Handgriff zu einer Baueinheit zusammenfügen.

In einer weiteren Ausführungsform ist der elastische Kompressionskörper an den wenigstens einen Anschlagring anvulkanisiert. In diesem Fall erfolgen die Herstellung des Kompressionskörpers und die Befestigung des Kompressionskörpers am Anschlagring vorteilhaft in nur einem Arbeitsschritt. Vulkanisieren und Formschluss können natürlich auch gemeinsame Befestigungsmöglichkeiten sein.

In einer besonders bevorzugten Ausführungsform der Zahnstangenlenkung weist die Endanschlag-Dämpfungsbaugruppe mehrere Anschlagringe auf, wovon einer als Befestigungsring für die Endanschlag-Dämpfungsbaugruppe dient und ein weiterer Anschlagring zumindest im axialen Endanschlag stirnseitig von der Zahnstange oder einem Zwischenteil kontaktiert wird.

Der Dämpfungsabschnitt liegt insbesondere zwischen zwei Anschlagringen, so dass der Abstand von deren gegenüberliegenden Kontaktflächen mit dem Kompressionskörper die axiale Länge des Dämpfungsabschnitts definiert.

Weitere Merkmale und Vorteile der Erfindung ergeben sich aus den Unteransprüchen und der nachfolgenden Beschreibung einer bevorzugten Ausführungsform unter Bezugnahme auf die Zeichnungen. In diesen zeigen:
- Figur 1 die schematische Skizze einer erfindungsgemäßen Zahnstangenlenkung;
- Figur 2 den Bereich "A" der Zahnstangenlenkung gemäß Figur 1 im Detailschnitt;
- Figur 3 eine Endanschlag-Dämpfungsbaugruppe der erfindungsgemäßen Zahnstangenlenkung vor dem Zusammenbau; und
- Figur 4 die Endanschlag-Dämpfungsbaugruppe gemäß Figur 3 nach dem Zusammenbau.

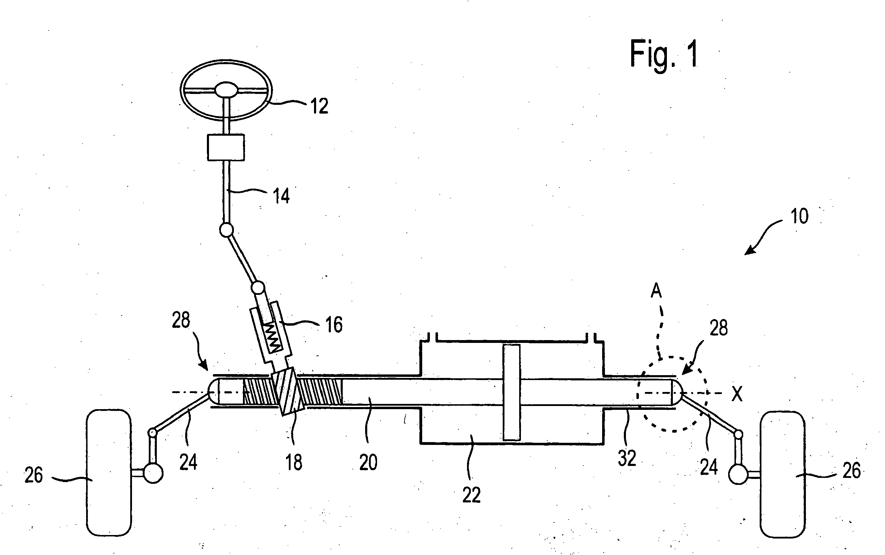

Die Figur 1 zeigt eine Zahnstangenlenkung 10 für Fahrzeuge Im dargestellten Ausführungsbeispiel ist die Zahnstangenlenkung 10 Teil eines elektrohydraulischen Fahrzeuglenksystems, bei dem ein Lenkrad 12 über eine Lenksäule 14 mit einem Servoventil 16 und einem Ritzel 18 verbunden ist. Das Ritzel 18 kämmt mit einer Zahnstange 20, sodass diese durch eine am Lenkrad 12 aufgebrachte, manuelle Lenkkraft beaufschlagt wird. Außerdem ist ein hydraulischer Stellzylinder 22 vorgesehen, der die Zahnstange 20 in bekannter Art und Weise mit einer hydraulischen Lenkkraft beaufschlagen kann.

An ihren axialen Enden ist die Zahnstange 20 über Spurstangen 24 mit lenkbaren Rädern 26 eines Fahrzeugs gekoppelt, wobei die Zahnstange 20 durch jeweils ein Kugelgelenk 28 mit den Spurstangen 24 verbunden ist. In einem Verbindungsbereich "A" zwischen Zahnstange 20 und Spurstange 24 ist an einem Zahnstangengehäuse 32 ein Endanschlag für die Zahnstange 20 ausgebildet, wobei durch den Endanschlag ein maximaler Lenkeinschlag defniert ist. Bei einer Lenkbewegung bis zum Endanschlag treten hohe mechanische Beanspruchungen in der Zahnstangenlenkung 10 auf. Um Schäden an der Lenkung zu vermeiden, ist daher üblicherweise eine Dämpfung im Bereich des Endanschlags vorgesehen.

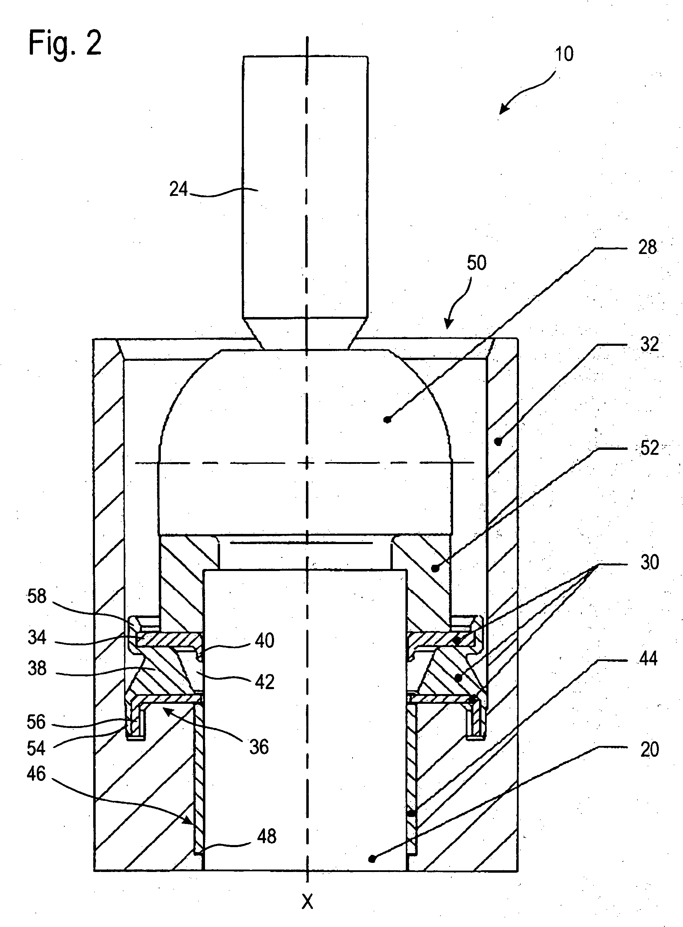

Eine besonders vorteilhafte Endanschlag-Dämpfungsbaugruppe 30 ist in der Figur 2 dargestellt, welche den Verbindungsbereich "A" aus Figur 1 im Detailschnitt zeigt.

Die Zahnstangenlenkung 10 umfasst gemäß Figur 2 die Zahnstange 20, welche eine Längsachse X aufweist, ein Zahnstangengehäuse 32, in dem die Zahnstange 20 zwischen zwei Endanschlägen axial verschieblich geführt ist, sowie die Endanschlag-Dämpfungsbaugruppe 30, die zwei Anschlagringe 34, 36 und einen elastischen Kompressionskörper 38 umfasst.

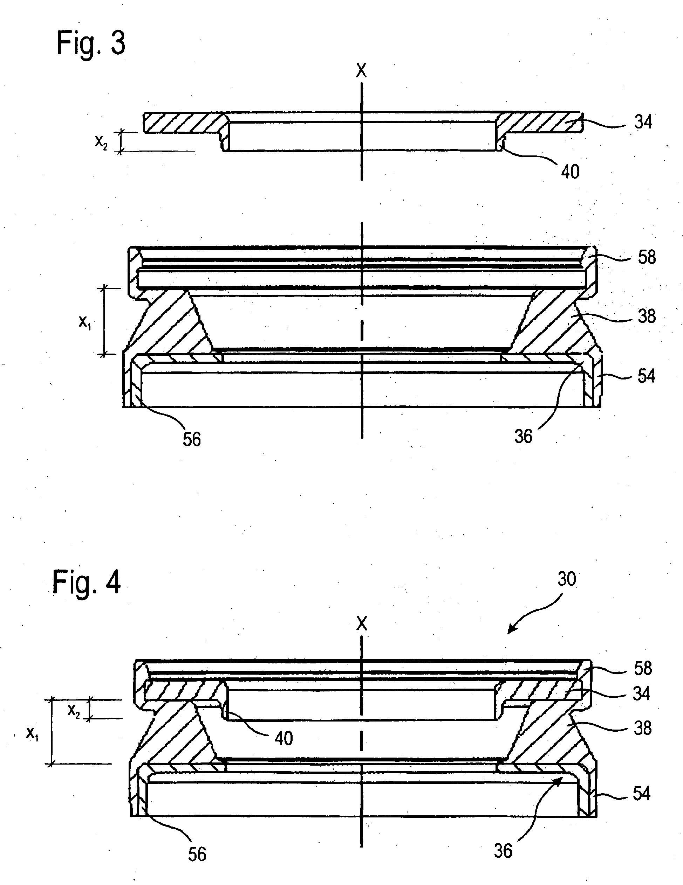

Der Kompressionskörper 38 umgibt die Zahnstange 20. Befindet sich die Zahnstange 20 nicht im Endanschlag, so weist in diesem nicht belasteten Zustand der Kompressionskörper 38, genauer gesagt sein zwischen den einander zugewandten Stirnflächen der Anschlagringe 34, 36 liegende Feder-/Dämpfungsabschnitt des Kompressionskörpers 38, eine axiale Länge x₁ auf (vgl. Figur 3).

Der Anschlagring 34 hat einen gegenüber dem Kompressionskörper 38 radial innenliegenden, umlaufenden axialen Führungsfortsatz 40, der eine axiale Länge x₂ aufweist, wobei die axiale Länge x₂ des Führungsfortsatzes 40 kleiner als die axiale Länge x₁ des Feder-/Dämpfungsabschnitts ist (vgl. auch Figuren 3 und 4).

Der Führungsfortsatz 40 des Anschlagrings 34 erstreckt sich in einen Radialspalt 42, der in axialer Richtung durch die beiden Anschlagringe 34, 36 und in radialer Richtung durch den Kompressionskörper 38 und die Zahnstange 20 definiert wird.

Alternativ oder zusätzlich zum Führungsfortsatz 40 am Anschlagring 34 ist es in einer (nicht gezeigten) Ausführungsvariante auch denkbar, dass am Anschlagring 36 ein axialer Führungsfortsatz 40 angeformt ist, welcher sich in den Radialspalt 42 zwischen der Zahnstange 20 und dem Kompressionskörper 38 erstreckt.

Gemäß Figur 2 umfasst die Zahnstangenlenkung 10 außerdem eine Führungsbuchse 44, die in einer Ausnehmung 46 des Zahnstangengehäuses 32 angeordnet ist und zur Führung der verschieblichen Zahnstange 20 dient, wobei der Anschlagring 36 der Endanschlag-Dämpfungsbaugruppe 30 die Führungsbuchse 44 axial im Zahnstangengehäuse 32 fixiert. Die Montage der Führungsbuchse 44 im Zahnstangengehäuse 32 vereinfacht sich dadurch im Vergleich zu herkömmlichen Zahnstangenlenkungen erheblich. Im Zahnstangengehäuse 32 ist lediglich eine Ausnehmung 46 vorzusehen, in welche die Führungsbuchse 44 vor der Montage der Endanschlag-Dämpfungsbaugruppe 30 eingeschoben wird. Diese einfach zu fertigende Ausnehmung 46 des Zahnstangengehäuses 32 weist an einem dem Anschlagring 36 entgegengesetzten Ende einen Absatz 48 auf, der einen axialen Anschlag für die Führungsbuchse 44 bildet.

Nachdem die Endanschlag-Dämpfungsbaugruppe 30 montiert, also am Zahnstangengehäuse 32 befestigt ist, ist die Führungsbuchse 44 durch den Absatz 48 des Zahnstangengehäuses 32 und den Anschlagring 36 der Endanschlag-Dämpfungsbaugruppe 30 im Rahmen üblicher Toleranzen axial fixiert, d.h. die Führungsbuchse 44 wird in der Ausnehmung 46 gehalten. Zur Befestigung der Endanschlag-Dämpfungsbaugruppe 30 wird diese in eine axiale Gehäuseöffnung 50 des Zahnstangengehäuses 32 eingeschoben, bis sie, wie in Figur 2 dargestellt, mit einer Presspassung im Zahnstangengehäuse 32 sitzt. Um diese Presspassung ausbilden zu können, dient der Anschlagring 36 als Befestigungsring des Kompressionskörpers 38 im Zahnstangengehäuse 32. Somit weist die Endanschlag-Dämpfungsbaugruppe 30 zwei Anschlagringe 34, 36 auf, wovon der eine als Befestigungsring 36 für die Endanschlag-Dämpfungsbaugruppe 30 dient und der andere zumindest im axialen Endanschlag der Zahnstangenlenkung 10 stirnseitig von der Zahnstange 20 oder einem fest mit der Zahnstange 20 verbundenen Zwischenteil 52 kontaktiert wird (vgl. Figur 2). Der Dämpfungsabschnitt des Kompressionskörpers 38 ist dabei zwischen den beiden Anschlagringen 34, 36 angeordnet.

Der als Befestigungsring ausgeführte Anschlagring 36 hat einen L-förmigen Querschnitt, wobei sich der eine Schenkel des "L" in radialer Richtung erstreckt und eine Kontaktfläche für den Kompressionskörper 38 bildet. Der andere Schenkel des "L" ist radial außen angeformt, erstreckt sich in axialer Richtung und bildet einen radial äußeren, zylindrischen Buchsenabschnitt 56.

Am Kompressionskörper 38 ist ein axialer Befestigungsfortsatz 54 für den Anschlagring 36 angeformt, wobei dieser Befestigungsfortsatz 54 den Buchsenabschnitt 56 außenseitig umgibt. Ein Außendurchmesser des zylindrischen Buchsenabschnitts 56 ist dabei im Verhältnis zu einem Durchmesser der zylindrischen Gehäuseöffnung 50 so gewählt, dass der Befestigungsfortsatz 54 in der montierten Position der Endanschlag-Dämpfungsbaugruppe 30 (vgl. Figur 2) zwischen dem Zahnstangengehäuse 32 und dem Buchsenabschnitt 56 radial geklemmt ist. Dabei sorgt der in der Regel aus Metall, vorzugsweise Stahl, gefertigte Anschlagring 36 für die notwendige Anpresskraft und der Befestigungsfortsatz 54 für einen ausreichenden Haftverbund zwischen dem Anschlagrihg 36 und dem Zahnstangengehäuse 32. Somit ist eine zuverlässige Befestigung der Endanschlag-Dämpfungsbaugruppe 30 am Zahnstangengehäuse 32 gewährleistet.

Die Figur 3 zeigt einen Schnitt durch die Endanschlag-Dämpfungsbaugruppe 30 vor ihrem Zusammenbau. Der Befestigungsring 36 und der elastische Kompressionskörper 38 bilden bereits eine Baueinheit, da der Kompressionskörper 38 vorzugsweise unmittelbar bei seiner Herstellung an den Anschlagring 36 anvulkanisiert wird. Dies bietet den Vorteil, dass die Herstellung des Kompressionskörpers 38 und seine zuverlässige und feste Verbindung mit dem Anschlagring 36 in nur einem Arbeitsschritt erfolgen kann, was die Herstellung der Endanschlag-Dämpfungsbaugruppe 30 sehr vereinfacht.

In einer Ausführungsvariante kann der Anschlagring 36 auch in den Befestigungsfortsatz 54 einvulkanisiert, also vollständig oder nahezu vollständig von dem elastischen Material des Kompressionskörpers 38 umgeben sein.

Der Kompressionskörper 38 ist gemäß den Figuren 2 bis 4 ein vorzugsweise aus einem Elastomer hergestellter Ring mit einem im Wesentlichen trapezförmigen Ringquerschnitt. Über diese Trapezform lässt sich eine Dämpfungs- oder Federkennlinie, insbesondere eine progressive Kennlinie, der Endanschlag-Dämpfungsbaugruppe 30 mit einfachen Mitteln einstellen. Aufgrund des Radialspalts 42 und des vergleichsweise axial kurzen Führungsfortsatzes 40 steht dem Kompressionskörper 38 genügend Raum für eine Verformung bei axialer Lastaufnahme zur Verfügung.

An den trapezförmigen Ringquerschnitt des Kompressionskörpers 38 schließt sich zum einen der bereits oben erwähnte axiale Befestigungsfortsatz 54 an, der den Buchsenabschnitt 56 außenseitig umgibt. Zum anderen schließt sich auf der axial entgegengesetzten Seite des trapezförmigen Ringquerschnitts ein weiterer axialer Befestigungsfortsatz 58 für den Anschlagring 34 an. Der Befestigungsfortsatz 58 ist dabei als elastischer Rastring ausgebildet, der sich bei einer axialen Zuführung des Anschlagrings 34 zunächst radial aufweitet und in einer montierten Position des Anschlagrings 34 (vgl. Figur 4) in seine Ausgangsposition zurückschnappt. Somit ist der Anschlagring 34 mittels einer Formschlussverbindung, vorzugsweise einer Rastverbindung, am elastischen Kompressionskörper 38 befestigt.

In den Figuren 3 und 4 sind die axiale Länge x₁ des Kompressionskörpers 38 sowie die axiale Länge x₂ des Führungsfortsatzes 40 am Anschlagring 34 eingezeichnet, wobei klar ersichtlich ist, dass die axiale Länge x₂ des Führungsfortsatzes 40 kleiner als die axiale Länge x₁ des trapezförmigen Feder-/Dämpfungsabschnitts des Kompressionskörpers 38 ist. Dies hat den positiven Effekt, dass der Kompressionskörper 38 im Vergleich zu einer vollständigen Einkapselung durch die Endanschlag-Dämpfungsbaugruppe 30 freiere Verformungsmöglichkeiten aufweist. Dies wirkt sich positiv auf die Einstellung einer gewünschten Kennlinie der Endanschlag-Dämpfungsbaugruppe 30 aus. Diese Kennlinie wird maßgeblich durch die konkreten Abmessungen des Trapezquerschnitts des Kompressionskörpers 38 sowie die axiale Länge des Führungsfortsatzes 40 beeinflusst.

Vorzugsweise ist die axiale Länge x₂ des Führungsfortsatzes 40 so gewählt, dass sie höchstens einer (nicht eingezeichneten) axialen Länge x₁' des maximal komprimierten Kompressionskörpers 38 entspricht. In diesem Fall übergreift der Führungsfortsatz 40 niemals den radial ausgerichteten L-Schenkel des Anschlagrings 36. Somit kann sich der L-Schenkel im montierten Zustand der Endanschlag-Dämpfungsbaugruppe 30 radial so weit nach innen erstrecken, dass eine axiale Fixierung der Führungsbuchse 44 im Zahnstangengehäuse 32 möglich ist (vgl. Figur 2).

Der Anschlagring 34 grenzt innenseitig sehr nahe an die Zahnstange 20 an und kann in Umfangsrichtung der Zahnstange 20 gesehen auch zumindest teilweise an der Zahnstange 20 gleitend anliegen. Der Führungsfortsatz 40 bietet hierbei den Vorteil, dass er eine größere Anlagefläche schafft, wodurch ein Verkanten des Anschlagrings 34 weitgehend ausgeschlossen wird.

Der Innendurchmesser des Anschlagrings 34 ist in der Regel geringfügig kleiner als der Innendurchmesser des Befestigungsrings 36, da ein Gleitkontakt zwischen dem Anschlagring 34 und der Zahnstange 20 ermöglicht, ein Kontakt zwischen dem Befestigungsring 36 und der Zahnstange 20 jedoch verhindert werden soll. Der L-Schenkel des Befestigungsrings 36 ist gerade so weit nach innen geführt, dass er die Führungsbuchse 44 in axialer Richtung zuverlässig fixieren kann, jedoch nicht in Kontakt mit der Zahnstange 20 tritt. Die Führungsfunktion der Zahnstange 20 relativ zum Zahnstangengehäuse 32 übernimmt in diesem Bereich ausschließlich die Führungsbuchse 44.

## Patentansprüche

1. Zahnstangenlenkung, mit
einer Zahnstange (20), die eine Längsachse (X) aufweist,
einem Zahnstangengehäuse (32), in dem die Zahnstange (20) zwischen zwei Endanschlägen axial verschieblich geführt ist, sowie
einer Endanschlag-Dämpfungsbaugruppe (30), die wenigstens einen Anschlagring (34, 36) und wenigstens einen elastischen Kompressionskörper (38) umfasst, wobei
der Kompressionskörper (38) die Zahnstange (20) umgibt und sein Feder-/ Dämpfungsabschnitt in einem nicht belasteten Zustand eine axiale Länge (x₁) aufweist, wobei
der Anschlagring (34, 36) einen gegenüber dem Kompressionskörper (38) radial innenliegenden, umlaufenden axialen Führungsfortsatz (40) hat, der eine axiale Länge (x₂) aufweist, wobei
die axiale Länge (x₂) des Führungsfortsatzes (40) kleiner als die axiale Länge (x₁) des Feder-/Dämpfungsabschnitts des Kompressionskörpers (38) ist
**dadurch gekennzeichnet, dass** am Kompressionskörper (38) wenigstens ein axialer Befestigungsfortsatz (54, 58) für den wenigstens einen Anschlagring (34, 36) ausgebildet ist.

2. Zahnstangenlenkung, mit
einer Zahnstange (20), die eine Längsachse (X) aufweist,
einem Zahnstangengehäuse (32), in dem die Zahnstange (20) zwischen zwei Endanschlägen axial verschieblich geführt ist, sowie
einer Führungsbuchse (44), die zur Führung der verschieblichen Zahnstange (20) dient und in einer Ausnehmung (46) des Zahnstangengehäuses (32) angeordnet ist, **dadurch gekennzeichnet, dass**
eine Endanschlag-Dämpfungsbaugruppe (30) vorgesehen ist, die wenigstens einen Anschlagring (34, 36) und wenigstens einen elastischen Kompressionskörper (38) umfasst, wobei
der Anschlagring (36) die Führungsbuchse (44) axial im Zahnstangengehäuse (32) fixiert.

3. Zahnstangenlenkung nach Anspruch 2, **dadurch gekennzeichnet, dass** der Kompressionskörper (38) die Zahnstange (20) umgibt und sein Feder-/ Dämpfungsabschnitt in einem nicht belasteten Zustand eine axiale Länge (x₁) aufweist, wobei der Anschlagring (34, 36) einen gegenüber dem Kompressionskörper (38) radial innenliegenden, umlaufenden axialen Führungsfortsatz (40) hat, der eine axiale Länge (x₂) aufweist, die kleiner als die axiale Länge (x₁) des Feder-/Dämpfungsabschnitts des Kompressionskörpers (38) ist.

4. Zahnstangenlenkung nach Anspruch 2 oder 3, **dadurch gekennzeichnet, dass** die Ausnehmung (46) des Zahnstangengehäuses (32) an einem dem Anschlagring (36) entgegengesetzten Ende einen Absatz (48) aufweist, der als axialer Anschlag für die Führungsbuchse (44) wirkt.

5. Zahnstangenlenkung nach einem der vorhergehenden Ansprüche, **dadurch gekennzeichnet, dass** die Endanschlag-Dämpfungsbaugruppe (30) am Zahnstangengehäuse (32) befestigt ist.

6. Zahnstangenlenkung nach einem der vorhergehenden Ansprüche, **dadurch gekennzeichnet, dass** die Endanschlag-Dämpfungsbaugruppe (30) in einer Gehäuseöffnung (50) aufgenommen ist und mit einer Presspassung im Zahnstangengehäuse (32) sitzt.

7. Zahnstangenlenkung nach einem der vorhergehenden Ansprüche, **dadurch gekennzeichnet, dass** der Kompressionskörper (38) ein Ring mit einem im wesentlichen trapezförmigen Ringquerschnitt ist.

8. Zahnstangenlenkung nach einem der vorhergehenden Ansprüche, **dadurch gekennzeichnet, dass** der Anschlagring (34, 36) mittels einer Formschlussverbindung am elastischen Kompressionskörper (38) befestigt ist.

9. Zahnstangenlenkung nach einem der vorhergehenden Ansprüche, **dadurch gekennzeichnet, dass** der elastische Kompressionskörper (38) an den wenigstens einen Anschlagring (34, 36) anvulkanisiert ist.

10. Zahnstangenlenkung nach einem der vorhergehenden Ansprüche, **dadurch gekennzeichnet, dass** ein Anschlagring (36) als Befestigungsring der Endanschlag-Dämpfungsbaugruppe (30) im Zahnstangengehäuse (32) dient.

11. Zahnstangenlenkung nach einem der vorhergehenden Ansprüche, **dadurch gekennzeichnet, dass** die Endanschlag-Dämpfungsbaugruppe (30) mehrere Anschlagringe (34, 36) aufweist, wovon einer als Befestigungsring (36) für die Endanschlag-Dämpfungsbaugruppe (30) dient und ein weiterer Anschlagring (34) zumindest im axialen Endanschlag stirnseitig von der Zahnstange (20) oder einem Zwischenteil (52) kontaktiert wird.

12. Zahnstangenlenkung nach einem der vorgehenden Ansprüche, **dadurch gekennzeichnet, dass** der Feder-/Dämpfungsabschnitt des Kompressionskörpers (38) zwischen zwei Anschlagringen (34, 36) angeordnet ist.

13. Zahnstangenlenkung nach Anspruch 11 oder 12, **dadurch gekennzeichnet, dass** in axialer Richtung zwischen zwei Anschlagringen (34, 36) und in radialer Richtung zwischen dem Kompressionskörper (38) und der Zahnstange (20) ein umlaufender Radialspalt (42) vorgesehen ist, in den sich der Führungsfortsatz (40) erstreckt.

14. Zahnstangenlenkung nach einem der vorhergehenden Ansprüche, **dadurch gekennzeichnet, dass** ein am Kompressionskörper (38) ausgebildeter axialer Befestigungsfortsatz (54, 58) für den wenigstens einen Anschlagring (34, 36) außenseitig an einem radial äußeren, zylindrischen Buchsenabschnitt (56) des zugeordneten Anschlagrings (34, 36) anliegt.

15. Zahnstangenlenkung nach Anspruch 14, **dadurch gekennzeichnet, dass** der Befestigungsfortsatz (54) zwischen dem Zahnstangengehäuse (32) und dem Buchsenabschnitt (56) radial geklemmt ist.

## Claims

1. A rack-and-pinion steering, comprising
a toothed rack (20) having a longitudinal axis (X),
a toothed rack housing (32) in which the toothed rack (20) is guided for axial displacement between two end stops, and
an end stop damping assembly (30) which includes at least one stop ring (34, 36) and at least one elastic compression body (38),
the compression body (38) surrounding the toothed rack (20), and its spring/damping section having an axial length (x₁) in a non-loaded condition,
the stop ring (34, 36) having a continuously surrounding axial guide extension (40) which is located radially inside in relation to the compression body (38) and has an axial length (x₂),
the axial length (x₂) of the guide extension (40) being smaller than the axial length (x₁) of the spring/damping section of the compression body (38),
**characterized in that** at least one axial attachment extension (54, 58) for the at least one stop ring (34, 36) is formed on the compression body (38).

2. A rack-and-pinion steering, comprising
a toothed rack (20) having a longitudinal axis (X),
a toothed rack housing (32) in which the toothed rack (20) is guided for axial displacement between two end stops, and
a guide bushing (44) which serves to guide the displaceable toothed rack (20) and is arranged in a recess (46) of the toothed rack housing (32), **characterized in that**
an end stop damping assembly (30) is provided which includes at least one stop ring (34, 36) and at least one elastic compression body (38),
the stop ring (36) axially fixing the guide bushing (44) in position in the toothed rack housing (32).

3. The rack-and-pinion steering according to claim 2, **characterized in that** the compression body (38) surrounds the toothed rack (20) and its spring/damping section has an axial length (x₁) in a non-loaded condition, the stop ring (34, 36) having a continuously surrounding axial guide extension (40) which is located radially inside in relation to the compression body (38) and has an axial length (x₂) that is smaller than the axial length (x₁) of the spring/damping section of the compression body (38).

4. The rack-and-pinion steering according to claim 2 or 3, **characterized in that** the recess (46) of the toothed rack housing (32) includes a shoulder (48) at an end opposite to the stop ring (36), the shoulder (48) acting as an axial stop for the guide bushing (44).

5. The rack-and-pinion steering according to any of the preceding claims, **characterized in that** the end stop damping assembly (30) is attached to the toothed rack housing (32).

6. The rack-and-pinion steering according to any of the preceding claims, **characterized in that** the end stop damping assembly (30) is accommodated in a housing opening (50) and is seated in the toothed rack housing (32) with an interference fit.

7. The rack-and-pinion steering according to any of the preceding claims, **characterized in that** the compression body (38) is a ring having a substantially trapezoidal annular cross-section.

8. The rack-and-pinion steering according to any of the preceding claims, **characterized in that** the stop ring (34, 36) is attached to the elastic compression body (38) by means of a form-locking connection.

9. The rack-and-pinion steering according to any of the preceding claims, **characterized in that** the elastic compression body (38) is vulcanized to the at least one stop ring (34, 36).

10. The rack-and-pinion steering according to any of the preceding claims, **characterized in that** a stop ring (36) serves as an attachment ring of the end stop damping assembly (30) in the toothed rack housing (32).

11. The rack-and-pinion steering according to any of the preceding claims, **characterized in that** the end stop damping assembly (30) includes a plurality of stop rings (34, 36), one of which serves as an attachment ring (36) for the end stop damping assembly (30) and a further stop ring (34) is contacted on the end face by the toothed rack (20) or an intermediate part (52) at least in the axial end stop.

12. The rack-and-pinion steering according to any of the preceding claims, **characterized in that** the spring/damping section of the compression body (38) is arranged between two stop rings (34, 36).

13. The rack-and-pinion steering according to claim 11 or 12, **characterized in that** a surrounding radial gap (42) is provided between two stop rings (34, 36) in the axial direction and between the compression body (38) and the toothed rack (20) in the radial direction, the guide extension (40) extending into the radial gap (42).

14. The rack-and-pinion steering according to any of the preceding claims, **characterized in that** an axial attachment extension (54, 58), which is formed on the compression body (38), for the at least one stop ring (34, 36) rests against the outer surface of a radially outer cylindrical bushing section (56) of the associated stop ring (34, 36).

15. The rack-and-pinion steering according to claim 14, **characterized in that** the attachment extension (54) is radially clamped between the toothed rack housing (32) and the bushing section (56).

## Revendications

1. Direction à crémaillère, comportant
une crémaillère (20) qui présente un axe longitudinal (X),
un boîtier de crémaillère (32) dans lequel la crémaillère (20) est guidée de manière axialement déplaçable entre deux butées d'extrémité, et
un ensemble d'amortissement (30) de butée d'extrémité qui comprend au moins un anneau de butée (34, 36) et au moins un corps de compression élastique (38),
le corps de compression (38) entourant la crémaillère (20), et son tronçon ressort/amortisseur présentant une longueur axiale (x₁) dans un état non sollicité,
l'anneau de butée (34, 36) comportant une saillie de guidage (40) axiale périphérique et radialement intérieure par rapport au corps de compression (38), qui présente une longueur axiale (x₂),
la longueur axiale (x₂) de la saillie de guidage (40) étant inférieure à la longueur axiale (x₁) du tronçon ressort/amortisseur du corps de compression (38),
**caractérisée en ce qu'**au moins une saillie de fixation axiale (54, 58) pour ledit au moins un anneau de butée (34, 36) est réalisée sur le corps de compression (38).

2. Direction à crémaillère, comportant
une crémaillère (20) qui présente un axe longitudinal (X),
un boîtier de crémaillère (32) dans lequel la crémaillère (20) est guidée de manière axialement déplaçable entre deux butées d'extrémité, et
une douille de guidage (44) qui sert au guidage de la crémaillère (20) déplaçable et qui est agencée dans un évidement (46) du boîtier de crémaillère (32), **caractérisée en ce que**
il est prévu un ensemble d'amortissement (30) de butée d'extrémité qui comprend au moins un anneau de butée (34, 36) et au moins un corps de compression élastique (38),
l'anneau de butée (36) fixant la douille de guidage (44) axialement dans le boîtier de crémaillère (32).

3. Direction à crémaillère selon la revendication 2, **caractérisée en ce que** le corps de compression (38) entoure la crémaillère (20), et son tronçon ressort/amortisseur présente une longueur axiale (x₁) dans un état non sollicité, l'anneau de butée (34, 36) comportant une saillie de guidage (40) axiale périphérique et radialement intérieure par rapport au corps de compression (38), qui présente une longueur axiale (x₂) inférieure à la longueur axiale (x₁) du tronçon ressort/amortisseur du corps de compression (38).

4. Direction à crémaillère selon la revendication 2 ou 3, **caractérisée en ce que** l'évidement (46) du boîtier de crémaillère (32) présente à une extrémité opposée à l'anneau de butée (36) un talon (48) qui agit en tant que butée axiale pour la douille de guidage (44).

5. Direction à crémaillère selon l'une des revendications précédentes, **caractérisée en ce que** l'ensemble d'amortissement (30) de butée d'extrémité est fixé sur le boîtier de crémaillère (32).

6. Direction à crémaillère selon l'une des revendications précédentes, **caractérisée en ce que** l'ensemble d'amortissement (30) de butée d'extrémité est reçu dans un orifice de boîtier (50) et est logé dans le boîtier de crémaillère (32) avec un ajustage serré.

7. Direction à crémaillère selon l'une des revendications précédentes, **caractérisée en ce que** le corps de compression (38) est un anneau avec une section transversale annulaire sensiblement trapézoïdale.

8. Direction à crémaillère selon l'une des revendications précédentes, **caractérisée en ce que** l'anneau de butée (34, 36) est fixé sur le corps de compression élastique (38) au moyen d'une liaison par coopération de formes.

9. Direction à crémaillère selon l'une des revendications précédentes, **caractérisée en ce que** le corps de compression élastique (38) est vulcanisé sur ledit au moins un anneau de butée (34, 36).

10. Direction à crémaillère selon l'une des revendications précédentes, **caractérisée en ce qu'**un anneau de butée (36) sert d'anneau de fixation de l'ensemble d'amortissement (30) de butée d'extrémité dans le boîtier de crémaillère (32).

11. Direction à crémaillère selon l'une des revendications précédentes, **caractérisée en ce que** l'ensemble d'amortissement (30) de butée d'extrémité présente plusieurs anneaux de butée (34, 36) dont l'un sert d'anneau de fixation (36) pour l'ensemble d'amortissement (30) de butée d'extrémité et un autre anneau de butée (34) est contacté, côté face frontale, par la crémaillère (20) ou par une pièce intermédiaire (52) au moins dans la butée d'extrémité axiale.

12. Direction à crémaillère selon l'une des revendications précédentes, **caractérisée en ce que** le tronçon ressort/amortisseur du corps de compression (38) est agencé entre deux anneaux de butée (34, 36).

13. Direction à crémaillère selon la revendication 11 ou 12, **caractérisée en ce qu'**une fente radiale périphérique (42) dans laquelle s'étend la saillie de guidage (40) est prévue entre deux anneaux de butée (34, 36) dans le sens axial et entre le corps de compression (38) et la crémaillère (20) dans le sens radial.

14. Direction à crémaillère selon l'une des revendications précédentes, **caractérisée en ce qu'**une saillie de fixation (54, 58) axiale réalisée sur le corps de compression (38) pour ledit au moins un anneau de butée (34, 36) repose sur la face extérieure sur un tronçon de douille (56) cylindrique radialement extérieur de l'anneau de butée (34, 36) associé.

15. Direction à crémaillère selon la revendication 14, **caractérisée en ce que** la saillie de fixation (54) est serrée radialement entre le boîtier de crémaillère (32) et le tronçon de douille (56).
